# EUROPÄISCHE PATENTANMELDUNG

(11) **EP 1 676 793 A1**
(43) Veröffentlichungstag der Anmeldung: **05.07.2006**
(21) Anmeldenummer: 05026343.3
(22) Anmeldetag: 02.12.2005
(51) Int. Cl.: B65G 47/24

(54) **Vorrichtung zum Drehen von Körpern um ihre Achse**

(30) Priorität: 29.12.2004 DE 202004020092 U
(71) Anmelder: Mohrbach Maschinenfabrik GmbH, 66509 Rieschweiler-Mühlbach (DE)
(72) Erfinder: Mohrbach, Hans, 66953 Pirmasens (DE)
(74) Vertreter: Patentanwälte Möll und Bitterich

(57) **Zusammenfassung**

Gegenstand der Erfindung ist eine Vorrichtung zum Drehen eines Körpers (1) mit zwei einander gegenüberliegenden parallelen Flachseiten um eine auf den Flachseiten stehende Achse (2).

Es sind zwei kreiskegelförmige Walzen (10, 11) vorgesehen. Diese sind synchron angetrieben. Die benachbarten Erzeugenden der Walzen (10, 11) liegen parallel zueinander und berühren den Körper (1) von oben bzw. unten. Die Walzenspitzen berühren die Achse (2).

## Beschreibung

Die Erfindung betrifft Vorrichtungen zum Drehen eines Körpers mit zwei einander gegenüberliegenden Flachseiten um eine auf den Flachseiten stehende Achse gemäß dem Oberbegriff des Anspruchs 1.

In vielen Bereichen der Technik, insbesondere bei der Produktion und Bearbeitung von Werkstücken, müssen diese Werkstücke um eine ihrer drei Achsen gedreht werden. Dazu werden die Werkstücke mit einer geeigneten Halte- und Hebevorrichtung von der Unterlage abgehoben, um eine Achse gedreht und schließlich wieder auf dieselbe oder eine andere Unterlage abgelegt.

Eine Wendevorrichtung für kegel- bzw. pyramidenstumpfartiges, in der Zusammensetzung inhomogenes, rissgefährdetes bzw. mit Rissen behaftetes, unebenes, randkonkaves bzw. -konvexes und in der Höhe tolerierendes Blockmaterial, welches bei Erhaltung seines Profils um 180° gewendet werden soll, ist bekannt aus der DE 276 397 A. Diese Wendevorrichtung besteht aus zwei an einer angetriebenen Doppelwelle mit gemeinsamem Drehpunkt angeordneten Hebelarmen mit an ihnen befestigtem Auf- und Ablagetisch. Der Auflagetisch weist an seiner Stirnseite im stumpfen Winkel zur Auflagefläche angeordnete Stirnbegrenzungen auf, während der Ablagetisch in Drehpunkten gelagerte Andruckhebel mit zwischen deren Kraftarmen zur Positionierung und Arretierung des Blockmaterials dienenden Druckzylindern aufweist. Diese Vorrichtung ist kompliziert und nicht für Körper mit zwei einander gegenüberliegenden Flachseiten geeignet.

Aus der DE 195 15 201 ist eine Vorrichtung zum Wenden von in einem Förderprozess befindlichen Produkten, welche zwei einander gegenüberliegende Flachseiten aufweisen, bekannt. Vorgesehen ist eine im wesentlichen in Förderrichtung verlaufende Antriebsachse mit einer Mehrzahl von sich senkrecht zu dieser erstreckenden, gleichsinnig drehend angetriebenen Förderwalzen, wobei jeweils benachbarte Förderwalzen miteinander über umlaufende Förderriemen verbunden sind. Die Drehachse der in Förderrichtung ersten Förderwalze erstreckt sich im wesentlichen horizontal. Die Drehachsen von in Förderrichtung auf die erste Förderwalze folgenden Förderwalzen schließen mit der ersten Förderwalze einen sich mit zunehmendem Abstand sukzessive vergrößernden Winkel ein. Dabei verläuft die Drehachse der in Förderichtung letzten Förderwalze im wesentlichen vertikal.

Diese Wendevorrichtung ist einigermaßen aufwändig. Das ist unbefriedigend.

Der vorliegenden Erfindung liegt die Aufgabe zugrunde, eine Fördervorrichtung der eingangs genannten Art anzugeben, die das Drehen der Körper mit minimalem konstruktiven Aufwand ermöglicht.

Diese Aufgabe wird gelöst durch eine Vorrichtung mit den Merkmalen des Anspruchs 1.

Der wesentliche Vorteil der vorliegenden Erfindung ist ihre Einfachheit. Weitere Vorteile bestehen darin, dass die Achse, um die die Körper gedreht werden, grundsätzlich frei wählbar ist. Frei wählbar ist auch die räumliche Orientierung der Drehachse. Ebenso frei wählbar ist der Kegelwinkel der Walzen; der Körper wird in jedem Fall so lange gedreht, bis seine Endkante die Walzen verlässt.

Gemäß einer Weiterbildung der Erfindung ist eine der Walzen federnd gelagert. Dadurch können kleinere Höhenänderungen des Körpers ausgeglichen werden.

Vorzugsweise ist der Abstand zwischen den Walzen verstellbar. Dies ermöglicht die Anpassung an Körper der unterschiedlichsten Abmessungen.

Gemäß einer ersten Weiterbildung der Erfindung umfasst der Antrieb der Walzen biegsame Wellen. Dadurch wird der Tatsache Rechnung getragen, dass die Wellen, um die die Walzen rotieren, im Winkel zueinander stehen müssen.

Alternativ hierzu kann der Antrieb auch Kreuzgelenke umfassen.

Schließlich besteht die Möglichkeit, jede der Walzen mit einem eigenen Elektromotor anzutreiben, wobei die Elektromotoren synchron laufen.

Für einen sicheren Betrieb empfiehlt es sich, die Mantelflächen der Walzen gleithemmend zu profilieren und/oder gleithemmend zu beschichten.

Für eine praktische Anwendung der erfindungsgemäßen Wendevorrichtung werden Förderbänder benötigt, die die Körper heranführen und abführen. Hierzu befindet sich gemäß einer Weiterbildung der Erfindung vor den Walzen ein Zuförderband, hinter den Walzen ein Abförderband. Die Reibung zwischen den Körpern und den Bändern ist kleiner als zwischen den Körpern und den Walzen.

Für einen optimalen Betrieb empfiehlt es sich, das Abförderband nicht langsamer laufen zu lassen als das Zuförderband bzw. die Walzen. Dadurch wird sichergestellt, dass es hinter den Wendewalzen nicht zu einem Förderstau kommt.

Wie schon erwähnt, müssen die Kegelwalzen synchron angetrieben werden. Dies wird im einfachsten Fall erreicht durch die Verwendung eines endlosen Zugmittels, welches die Walzen schlupffrei antreibt.

Vorzugsweise ist dies ein Zahnriemen.

Anhand der Zeichnung soll die Erfindung in Form von Ausführungsbeispielen näher erläutert werden. Es zeigen jeweils rein schematisch
- Fig. 1: eine Vorderansicht einer Vorrichtung zum Drehen eines Körpers um seine Hochachse,
- Fig. 2: eine Seitenansicht der Vorrichtung von Fig. 1,
- Fig. 3: eine gegenüber Fig. 1 abgewandelte Vorrichtung und
- Fig. 4: als Schrägansicht die Wendevorrichtung der Fig. 1 mit Zu- und Abförderband.

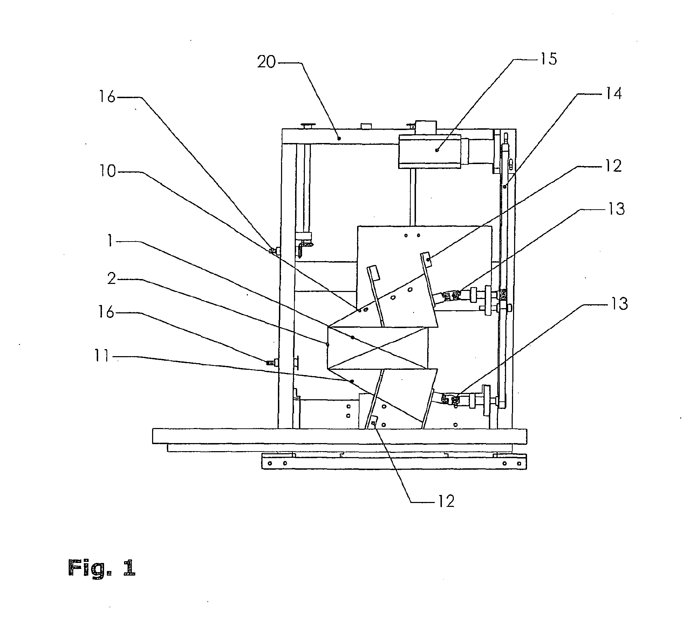

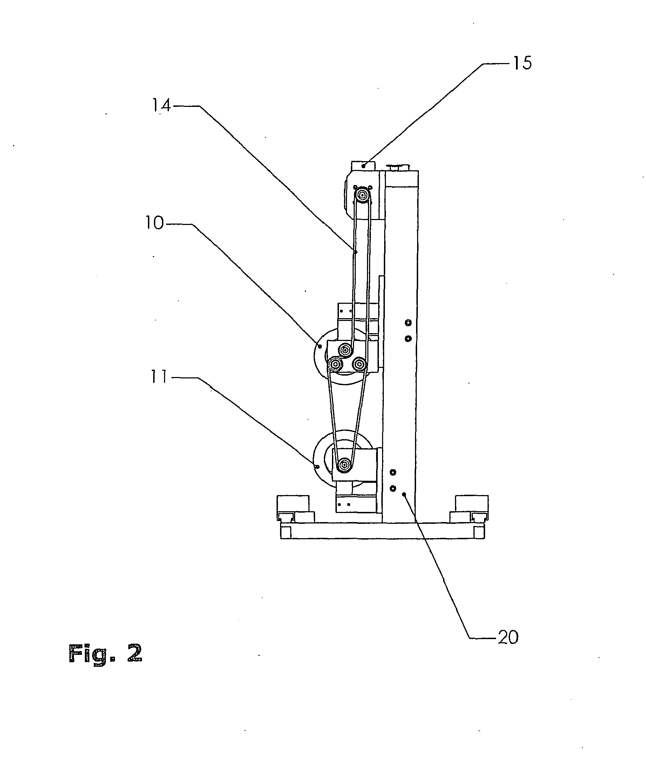

Fig. 1 als Vorderansicht und Fig. 2 als Seitenansicht zeigen eine Vorrichtung zum Drehen eines Körpers 1 mit zwei einander gegenüberliegenden parallelen Flachseiten, hier Boden und Deckel einer kubischen Schachtel, um eine auf den Flachseiten stehende Drehachse 2. In einem stabilen Rahmengestell 20 sind mit Hilfe von Konsolen 12 zwei kegelförmige Walzen 10, 11 gelagert. Die Kegelwalzen 10, 11 sind so positioniert, dass ihre benachbarten Erzeugenden parallel zueinander liegen und den Körper 1 von oben bzw. unten berühren. Gleichzeitig berühren die Walzenspitzen die Drehachse 2. Hier ist dies die Hochachse, um die der Körper 1 gedreht wird.

Der synchrone, gegenläufige Antrieb der beiden Kegelwalzen 10, 11 erfolgt durch einen endlosen Zahnriemen 14, der von einem Motor 15 angetrieben wird. Dabei ist der Zahnriemen 14 so geführt, dass die obere Walze 11 mit Hilfe einer Kurbel in der Höhe verstellt werden kann, ohne dass der Riemen 14 nachgespannt werden muss.

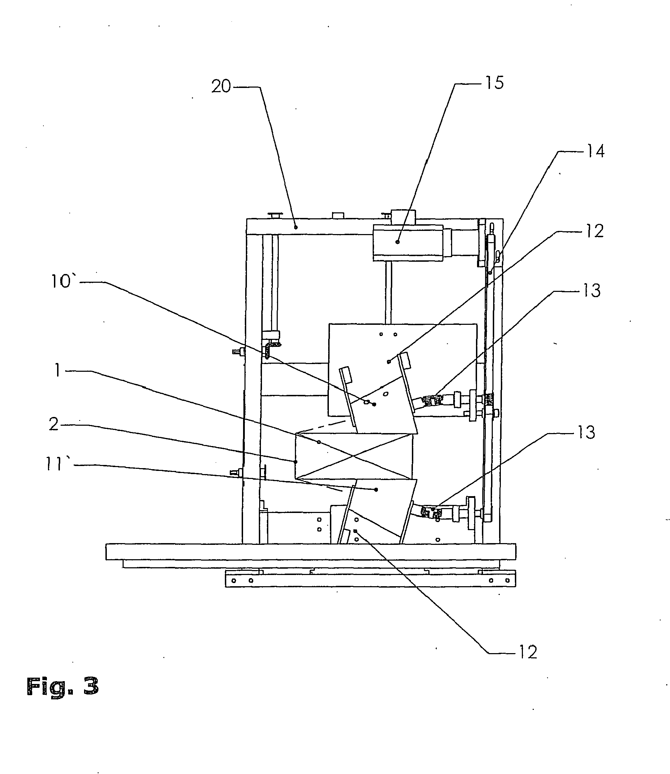

Fig. 3 zeigt eine Abwandlung der in der Fig. 1 dargestellten Konstruktion. Hier sind die Walzen 10', 11' als Kegelstumpf ausgebildet. Auch in diesem Fall erfolgt die Drehung des Körpers 1 um seine Hochachse 2, die von den imaginären Walzenspitzen berührt wird.

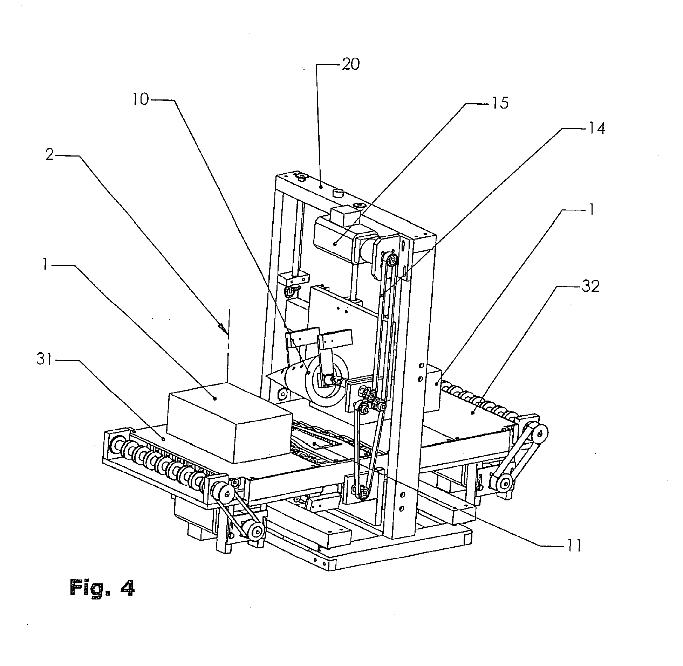

Fig. 4 zeigt eine komplette Wendestation für Faltschachteln. Vor den Kegelwalzen 10, 11 ist ein Zuförderband 31 angeordnet, welches den zu drehenden Körper 1 den Kegelwalzen 10, 11 zuführt. Der um 90° gedrehte Körper 1 wird von einem Abförderband 32 abgeführt. Zu- und Abförderband 31, 32 laufen in einem stabilen Rahmen 30. Das Abförderband 32 läuft nicht langsamer als die Walzen 10, 11 bzw. das Zuförderband 31.

## Patentansprüche

1. Vorrichtung zum Drehen eines Körpers (1) mit zwei einander gegenüberliegenden parallelen Flachseiten um eine auf den Flachseiten stehende Achse (2), **gekennzeichnet durch** die Merkmale:
- es sind zwei kreiskegelförmige Walzen (10, 11; 10', 11') vorgesehen,
- die Walzen (10, 11; 10', 11') sind synchron angetrieben,
- die Erzeugenden der Walzen (10, 11; 10', 11')
― liegen parallel zueinander
― und berühren den Körper (1) von oben bzw. unten,
- die Walzenspitzen berühren die Achse (2).

2. Vorrichtung nach Anspruch 1, **gekennzeichnet durch** das Merkmal:
- eine der Walzen (10, 11; 10', 11') ist federnd gelagert.

3. Vorrichtung nach Anspruch 1 oder 2, **gekennzeichnet durch** das Merkmal:
- der Abstand zwischen den Walzen (11, 11') ist verstellbar.

4. Vorrichtung nach einem der Ansprüche 1 bis 3, **gekennzeichnet durch** das Merkmal:
- wenigstens eine der Walzen ist als Kegelstumpf (10', 11') ausgebildet.

5. Vorrichtung nach einem der Ansprüche 1 bis 4, **gekennzeichnet durch** das Merkmal:
- der Antrieb der Walzen (10, 11; 10', 11') umfasst biegsame Wellen.

6. Vorrichtung nach einem der Ansprüche 1 bis 4, **gekennzeichnet durch** das Merkmal:
- der Antrieb der Walzen (10, 11; 10', 11') umfasst Kreuzgelenke (13).

7. Vorrichtung nach einem der Ansprüche 1 bis 4, **gekennzeichnet durch** das Merkmal:
- der Antrieb der Walzen (10, 11; 10', 11') umfasst zwei synchron laufende Elektromotoren.

8. Vorrichtung nach einem der Ansprüche 1 bis 7, **gekennzeichnet durch** das Merkmal:
- die Mantelflächen der Walzen (10, 11; 10', 11') sind gleithemmend profiliert.

9. Vorrichtung nach einem der Ansprüche 1 bis 8, **gekennzeichnet durch** das Merkmal:
- die Mantelflächen der Walzen (10, 11; 10', 11') sind gleithemmend beschichtet.

10. Vorrichtung nach einem der Ansprüche 1 bis 9, **gekennzeichnet durch** das Merkmal:
- vor den Walzen (10, 11; 10', 11') befindet sich ein Zufördererband (31),
- hinter den Walzen (10, 11; 10', 11') befindet sich ein Abfördererband (32),
- die Reibung zwischen dem Körper (1) und den Bändern (31, 32) ist kleiner als zwischen dem Körper (1) und den Walzen (10, 11; 10', 11').

11. Vorrichtung nach Anspruch 10, **gekennzeichnet durch** das Merkmal:
- das Abförderband (32) läuft nicht langsamer als das Zuförderband (31).

12. Vorrichtung nach Anspruch 10 oder 11, **gekennzeichnet durch** das Merkmal:
- das Abförderband (32) läuft nicht langsamer als die Walzen (10, 11; 10', 11').

13. Vorrichtung nach einem der Ansprüche 1 bis 12, **gekennzeichnet durch** die Merkmale:
- die Walzen (10, 11; 10', 11') sind mittels desselben endlosen Zugmittels (14) schlupffrei angetrieben.

14. Vorrichtung nach Anspruch 13, **gekennzeichnet durch** das Merkmal:
- das endlose Zugmittel (14) ist ein Zahnriemen.
